# EUROPÄISCHE PATENTANMELDUNG

(11) **EP 0 657 318 A1**
(43) Veröffentlichungstag der Anmeldung: **14.06.1995**
(21) Anmeldenummer: 94115164.9
(22) Anmeldetag: 27.09.1994
(51) Int. Cl.: B60K 20/04

(54) **Schalthebellagerung**

(30) Priorität: 13.12.1993 DE 4342443
(71) Anmelder: Helmut Elges GmbH, D-33803 Steinhagen (DE)
(72) Erfinder: Klocke, Hans-Jorg, Dipl.-Ing., D-32584 Löhne (DE); Büsching, Rainer, D-33647 Bielefeld (DE)
(74) Vertreter: Stracke, Alexander, Dipl.-Ing.

(57) **Zusammenfassung**

2.1 Bei derartigen Schalthebellagerungen, die vorzugsweise am Boden eines Fahrerhauses eines LKW's festgelegt sind, besteht die Forderung, eine Verschwenkung eines in der Schalthebellagerung gelenkig gehaltenen Schalthebels so weit wie möglich zu ermöglichen, so daß das Fahrerhaus so weit aus seiner Lage heraus geschwenkt werden kann, daß ein optimaler Zugriff auf einen darunter liegenden Motor möglich ist. Soweit dies bislang realisiert ist, basieren diese Lösungen auf einem konstruktiv recht aufwendigen Konzept, das sowohl in der Herstellung als auch in der Montage relativ teuer ist. Die Aufgabe der Erfindung ist es daher, eine Schalthebellagerung zu schaffen, die mit konstruktiv einfachen Mitteln ein Optimum an Verschwenkbarkeit erreicht, wobei gleichzeitig eine kostengünstige Herstellung und Montage möglich sein soll.

2.2 Dazu ist vorgesehen, daß ein Gelenklager, in dem ein Kugelteil (7) des Schalthebels (6) gelagert ist, aus zwei sich gegenüberliegenden, kalottenartig ausgebildeten Halteschalen (5) besteht, die abständig zueinander angeordnet sind und jeweils einen geringen Teil des Kugelteiles (7) anliegend überdecken.

2.3 Während einerseits durch die Halteschalen (5) ein sicherer Halt des Schalthebels (6) gewährleistet ist, kann, da hier keine entsprechenden Bauteile vorgesehen sind, in den den Halteschalen angrenzenden seitlichen Bereichen der Schalthebel optimal weit verschwenkt werden.

## Beschreibung

Die vorliegende Erfindung betrifft eine Schalthebellagerung gemäß dem Oberbegriff des Anspruches 1.

Derartige Schalthebellagerungen werden vorzugsweise eingesetzt, um den ein Getriebe betätigenden Schalthebel im Bodenbereich eines LKW-Fahrerhauses festzulegen.

Dabei besteht eine Forderung darin, daß der Schalthebel zumindest in einer Richtung in einem größtmöglichen Bereich schwenkbar sein soll. Ziel dieser Forderung ist es, eine größtmögliche Verschwenkbarkeit des Fahrerhauses zu erreichen, um einen optimalen Zugriff auf einen darunter liegenden Motor zu erhalten.
Bei nicht ausreichendem Schwenkbareich des Schalthebels ist eine wünschenswert weite Öffnung des Motorraumes nicht gegeben, da dann der feststehende Schalthebel recht bald am Boden des verschwenkten Fahrerhauses anschlägt.

Es ist zwar schon versucht worden, diesem Mißstand abzuhelfen, jedoch haben sich die bekannten Lösungen als sehr aufwendig und in der Herstellung sehr teuer erwiesen, was naturgemäß einem mit allenBelangen optimalen Einsatz entgegensteht.

Der vorliegenden Erfindung liegt daher die Aufgabe zugrunde, eine Schalthebellagerung der gattungsgemäßen Art so zu gestalten, daß sie mit konstruktiv einfachsten Mitteln eine optimale Verschwenkung des Schalthebels ermöglicht und gleichzeitig kostengünstig herstellbar ist.

Diese Aufgabe wird durch eine Schalthebellagerung erreicht, die die kennzeichnenden Merkmale des Anspruches 1 aufweist.

Dabei macht sich die Erfindung zunutze, daß es vollkommen ausreichend ist, den Schalthebel in zwei sich gegenüberliegenden Bereichen zu halten, wobei praktisch nur jeweils ein Kugelsegment durch die kalottenartig ausgebildeten Halteschalen übergriffen wird.

Die den Halbschalen beanchbarten, sich gleichfalls gegenüberliegenden Seitenbereiche sind praktisch bauteilfrei, so daß der Schalthebel in diesen Bereichen um einen maximalen Winkel schwenkbar ist.

Eine besonders vorteilhafte Ausgestaltung der Erfindung sieht vor, daß die Halteschalen in einem Gehäuse angeordnet sind, daß vorzugsweise aus einem Unter- und einem Oberteil besteht, während die Halteschalen von diesen beiden Teilen klemmend gehalten werden.

Hierdurch ist nicht nur eine besonders einfache Herstellung der gesamten Schalthebellagerung möglich, sondern auch eine äußerst einfache Montage, wobei sowohl das Gehäuse als auch die Halteschalen zweckmäßigerweise aus einem Kunststoff bestehen.
Vor allem die Ausbildung der Halteschalen aus Kunststoff bietet im Zusammenwirken mit dem üblicherweise aus Metall bestehenden Kugelteil des Schalthebels einige Vorteile, da eindringende Staubkörner o. dgl. die Verschwenkbarkeit des des Schalthebels keinesfalls einschränkt.

Um zu verhindern, daß die feste Lagerung des Kugelteiles durch Abnutzen der Halteschalen beeinträchtigt wird, sieht ein weiterer Gedanke der Erfindung vor, daß diese derart federnd im Gehäuse festgelegt sind, daß sie ständig mit einem gewissen Druck an das Kugelteil angepreßt werden.

Durch eine Druckplatte o.dgl., die mittels einer Schraube an die Federn zumindest einer Halteschale andrückbar ist, kann die Federkonstante so verändert werden, daß der Anpreßdruck der Halteschale an das Kugelteil entsprechend den Wünschen und Erfordernissen angepaßt werden kann.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1 und 2: jeweils einen Teilquerschnitt durch eine erfindungsgemäß ausgestaltete Schalthebellagerung,
- Fig. 3: ein Gehäuseteil der Schalthebellagerung in einer Draufsicht.

Eine Schalthebellagerung, die in den Figuren mit dem Bezugszeichen 1 versehen ist, besteht in ihrem wesentlichen Grundaufbau aus einem Gehäuse 2, das ein Oberteil 3 und ein Unterteil 4 aufweist und das am Boden eines nicht dargestellten Fahrerhauses eines LKW befestigbar ist.

Das Oberteil 3 und das Unterteil 4 sind miteinander verbunden und weisen im Innenraum eine Öffnung auf, in der sich gegenüberliegend zwei kalottenartig ausgebildete Halteschalen 5 festgesetzt sind.

Diese weisen auf ihren einander abgewandten Seiten einen Rand 13 auf, der in entsprechend ausgebildeten Ausnehmungen des Ober- und Unterteiles 3,4 einliegt, so daß die Halteschalen 5 form- und kraftschlüssig, durch Klemmen, gehalten sind.

Jede Halteschale 5 ist im Bereich des Randes 13 mit zwei parallel und mit Abstand zueinander angeordnete Federaufnahmen 10 versehen, von denen jede eine Aufnahmebohrung 11 aufweist, in der eine Druckfeder einliegt, die sich andererseits an einem Gegenlager 9 des Unterteiles 4 oder des Oberteiles 3 abstützt.

Die abständig zueinander angeordneten Halteschalen 5 überdecken jeweils einen geringen Teil eines Kugelteiles 7, das Bestandteil eines Schalthebels 6 ist, wobei das Kugelteil 7 mit einer Hebelstange 8, die mit einem Getriebe in Wirkverbindung bringbar ist, verbunden ist. Die Überdeckungsfläche der Halteschalen 5 ist so zu wählen, daß sie eine bestimmte Durchdrückkraft aufnehmen können, so daß der Schalthebel 6 nicht aus seiner axial arretierten Lage herausgedrückt werden kann.

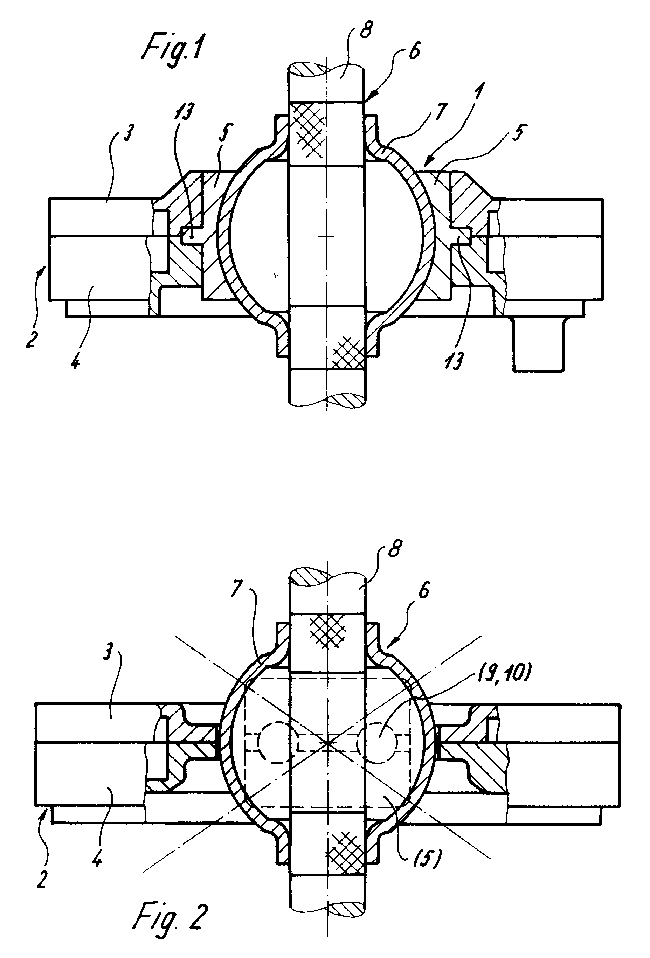

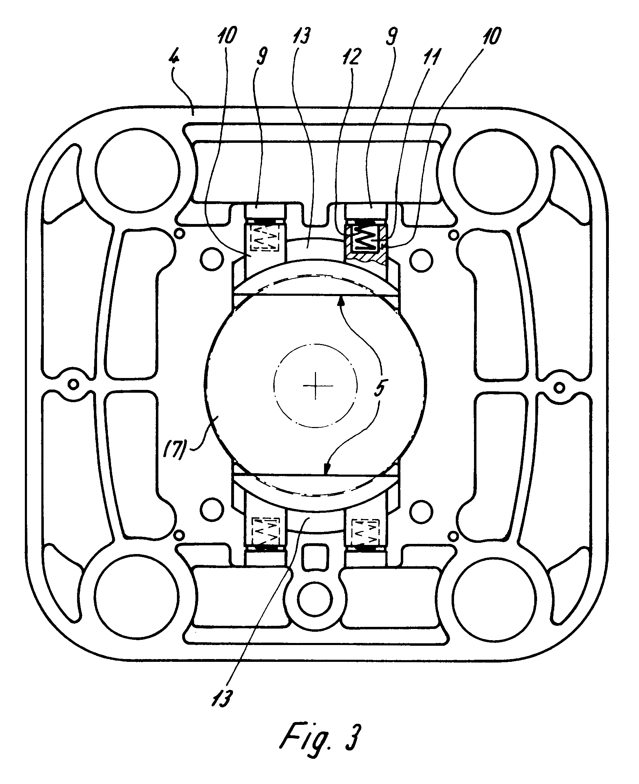

Wie insbesondere aus der Figur 3 erkennbar ist, sind die den Halteschalen 5 benachbarten Bereiche frei von irgendwelchen Bauteilen, was einen großen Schwenkbereich des Schalthebels 6 bzw. der Hebelstange 8 ermöglicht. Dies wird durch die strichpunktierten Linien in der Figur 2 verdeutlicht.

Trotzdem ist durch die Halteschalen 5 ein sicherer Halt des Schalthebels 6 gewährleistet.

### Bezugszeichen

- 1: Schalthebellagerung
- 2: Gehäuse
- 3: Oberteil
- 4: Unterteil
- 5: Halteschale
- 6: Schalthebel
- 7: Kugelteil
- 8: Hebelstange
- 9: Gegenlager
- 10: Federaufnahme
- 11: Aufnahmebohrung
- 12: Druckfeder
- 13: Rand

## Patentansprüche

1. Schalthebellagerung mit einem Gelenklager und einem mittels eines Kugelteiles gelenkig darin gehaltenen Schalthebel, **dadurch gekennzeichnet,** daß das Gelenklager aus zwei sich gegenüberliegenden, kalottenartig ausgebildeten Halteschalen(5)besteht, die abständig zueinander angeordnet sind und jeweils einen geringen Teil des Kugelteiles (7) anliegend überdecken.

2. Schalthebellagerung nach Anspruch 1, dadurch gekennzeichnet, daß die Halteschalen (5) in einem Gehäuse (2) gehalten sind.

3. Schalthebellagerung nach Anspruch 2, dadurch gekennzeichnet, daß das Gehäuse (2) aus einem Ober- und einem Unterteil (3, 4) besteht, die miteinander verbunden sind.

4. Schalthebellagerung nach einem der Ansprüche 1 bis 3, dadurch gekennzeichnet, daß die Halteschalen(5)auf ihren einander abgewandten Seiten einen Rand (13) aufweisen, der in entsprechend angepaßten Ausnehmungen des Ober- und/oder Unterteiles (3, 4) einliegt.

5. Schalthebellagerung nach einem der Ansprüche 1 bis 4, dadurch gekennzeichnet, daß die Halteschalen (5) federnd in dem Gehäuse (2) gehalten sind, wobei sie durch den Federdruck an das Kugelteil (7) gedrückt werden.

6. Schalthebellagerung nach Anspruch 5, dadurch gekennzeichnet, daß jede Halteschale (5) mit mindestens einer Federaufnahme (10) versehen ist, in der eine Druckfeder (12) einliegt, die sich andererseits am Gehäuse (2) abstützt.

7. Schalthebellagerung nach Anspruch 6, dadurch gekennzeichnet, daß das Unterteil (4) mit Gegenlagern (9) versehen ist, an denen die in den Federaufnahmen (10) anliegenden Druckfedern (12) mit einer Stirnseite anliegen.

8. Schalthebellagerung nach Anspurch 5, dadurch gekennzeichnet, daß eine Druckplatte vorgesehen ist, die mittels einer Schraube an die Federn (12) zumindest einer Halteschale (5) in Richtung des Kugelteiles (7) andrückbar ist.

9. Schalthebellagerung nach einem der Ansprüche 1 bis 7, dadurch gekennzeichnet, daß das Gehäuse (2) und die Halteschalen (5) aus einem Kunststoff bestehen.
